# EUROPEAN PATENT SPECIFICATION

(11) **EP 1 953 960 B1**
(45) Date of publication and mention of the grant of the patent: **12.01.2011**
(21) Application number: 07425048.1
(22) Date of filing: 31.01.2007
(51) Int. Cl.: H04L 12/24

(54) **Method of performing a management operation on a network element of a telecommunication network**
Verfahren zur Durchführung einer Verwaltungsoperation an einem Netzwerkelement eines Telekommunikationsnetzwerks
Procédé pour effectuer une opération de gestion d'un élément de réseau sur un réseau de télécommunication

(43) Date of publication of application: 06.08.2008
(73) Proprietor: Alcatel Lucent, 75007 Paris (FR)
(72) Inventor: Paparella, Andrea, 21052 Gusto Arsizio (Varese) (IT); Donadio, Pasquale, 80129 Napoli (IT); Riglietti, Roberto, 20059 Vimercate (Milano) (IT)
(74) Representative: Schmidt, Werner Karl

(56) References cited:
- US-A1- 2003 217 133
- US-A1- 2004 098 474
- US-A1- 2004 225 727

## Description

### Field of the Invention

The present invention relates to the field of telecommunication systems. In particular, the present invention relates to a method of performing a management operation on a network element of a telecommunication network. Further, the present invention relates to a network element of a telecommunication network, a management apparatus of a telecommunication network and a telecommunication network suitable to perform the method according to the present invention.

### Background Art

As it is known, a telecommunication network comprises a plurality of network elements suitable to support user traffic. The user traffic may be either in form of TDM (Time Division Multiplexing) flows, in case of circuit-switched telecommunication networks, or in form of packets, in case of packet-switched networks.

In order that a telecommunication network operates in a proper way, a number of network management operation must be performed, which include for instance:
- monitoring network performance;
- configuring network elements and their resources (boards, ports, cross-connections, etc.);
- testing the telecommunication network;
- managing faults occurring in the network ("troubleshooting"); etc.

As it is known, managing a telecommunication network may be performed by a network apparatus which is termed Network Management System (NMS). Each network element to be managed has an "agent", i.e. a module suitable to interact with the NMS. The communication between the NMS and the agent of each network element occurs by means of a management protocol, which is dependent on the network type. For packet-switched networks, an exemplary management protocol is Q3. On the other hand, for packet-switched networks, an exemplary management protocol is SNMP (Simple Network Management Protocol).

Each network element to be managed typically comprises a local database, in tum comprising information relative to resources of the network element. Exemplary resources are a board, a port, a cross-connection, etc.

The logical structure according to which information stored in the local database are organized depends on the type of network element and management protocol. For instance, in case of the above mentioned SNMP, the logical structure according to which information relative to the network element's resources are organized is object table-oriented, and it is termed MIB (Management Information Base).

In the local database, each resource is represented with a list of attributes. For instance, if the resource is a board, exemplary attributes may be the board type, the alarms that the board may generate, the part-number or the like. Further, for each resource the local database typically comprises a list of operations that can be performed upon the resource (for instance creating the resource, deleting the resource, modifying its configuration, etc.).

The NMS typically may access a centralized database, which also comprises a representation of network elements' resources of the telecommunication network. Information comprised in the centralized database are updated upon request of the NMS by means of suitable messages sent to the various network elements (for instance, the message getRequest provided by the SNMP).

When an operator responsible for network management performs a management operation through the NMS (for instance, creating a new cross-connection, creating a new port, modifying the configuration of a board, etc.), he visualizes through the NMS a graphic interface providing him with a representation of the resource(s) involved in the management operation he wishes to perform. Such a representation is based upon information stored in the centralized database at the NMS. Therefore, such a representation may not correspond to the representation stored at the local databases of the network elements.

Executing a management operation by the NMS implies that the NMS transmits to the managed network element at least a request message, which typically contains a request of performing a given operation (reading, writing, modifying, creating, etc.) upon one or more attributes of a resource.

When the network element receives from the NMS a request message, it performs several checks upon its content, since both the attributes and the operations associated to a given resource has to fulfill one or more conditions.

For instance, if the management operation provides creation of a new resource, the network element has to check whether it is possible to create the resource. More particularly, if the management operation consists e.g. in creating a new cross-connection between a first and second ports, the network element has to check in its own local database whether resources required for creating the cross-connection already exist, i.e. whether the two ports specified by the operator already exist. On the other hand, if the management operation consists e.g. in creating a new port, the network element has to check whether the identifier specified by the operator for identifying the new port has an allowable value.

After checking whether attributes and operations contained in the received request message fulfill the associated conditions, the network element may send to the NMS a response message reporting the check outcome. If the conditions are fulfilled, the response message is an "ok" message, indicating that the operations has been properly completed at the network element. If the conditions are not fulfilled, the response message is an error message, which may comprise details about the type of error which has occurred (for instance, the inserted port identifier does not exist or it is not valid, etc.).

US 2003/0217133 discloses a consistency checking mechanism allowing network operators to create their own consistency checking rules. Several consistency check formulas are provided. Each formula defines one or more general operations on one or more managed network objects. By applying a general consistency check formulas to one or more specific managed network objects, one or more consistency check rules is generated.

US 2004/0225727 discloses a network management system including a policy manager associated with a set of policies and including distribution means for sending said policies to policy enforcement points in accordance with distribution instructions via policy decision points, **characterized in that** said policy manager further includes validation means for validating if said policy enforcement points can enforce said policies and correcting said distribution instructions as a function of said validation.

US 2004/0098474 discloses a network management system program and graphical user interface for large-scale optical networks is described. The network management system includes a connection management system that allows a user to manually configure connections among network elements within the network. The user defines general connection attributes within the network and adds network elements to the route or routes.

### Summary of the invention

The Applicant has noticed that the above known solution exhibits some drawbacks.

First of all, the Applicant has noticed that the above solution requires exchanging a high number of messages between the NMS and the network element. Indeed, for each request message sent from the NMS to the network element it is required to send a response message from the network element to the NMS, which may be either an "ok" message or an error message. In the latter, it is further required to retransmit the request message from the NMS to the network element, which comprises the information corrected according to the indications comprised in the error message.

Further, the Applicant has noticed that sending request messages comprising attributes and/or operations not fulfilling the conditions associated to the network element implies a waste of resources, both from the point of view of connection between NMS and network element (which has to support useless transmission of request messages comprising wrong information), and from the point of view of computation resources of the network element (which has to performs consistency checks each time it receives a request message from the NMS).

Therefore, an object of the present invention is providing a method of performing a management operation upon a network element of a telecommunication network which overcomes the aforesaid drawbacks.

In particular, an object of the present invention is providing a method for performing a management operation upon a network element of a telecommunication network which allows to reduce the number of messages exchanged between the NMS and the network element, and to reduce the use of computation resources at the network element.

According to a first aspect, the present invention provides a method of performing a management operation upon a network element of a telecommunication network, comprising the steps of: storing at the network element information relative to a resource of the network element, the information comprising a at least one of an attribute of the resource and of an operation performable on the resource and a constraint associated to said resource, the constraint comprising a code portion expressing a condition that must be fulfilled by the attribute or by the operation; transmitting a message from the network element to a management apparatus of the telecommunication network, the message comprising the constraint; and checking at the management apparatus whether a further attribute or a further operation included in a request message to be sent by the management apparatus to the network element fulfills the constraint.

According to a second aspect, the present invention provides a network element of a telecommunication network, the network element comprising: a database comprising information relative to a resource of the network element, the information comprising at least one of an attribute of the resource and of an operation performable on the resource and a constraint associated to the resource; and a transmitting module for transmitting a message from the network element to a management apparatus of the telecommunication network, the message comprising the constraint.

Preferably, the constraint comprises: a type and an identifier of the constraint, an identifier of the attribute or operation and a relation that the attribute or operation has to fulfill.

The constraint preferably comprises a relation between the attribute or operation and a still further attribute or operation of a further resource of the network element, or a relation between the attribute or operation and a time-constant value, or a relation between the attribute or operation and a time-variable value.

According to preferred embodiments, the transmitting module is suitable to format the message according to a management protocol. According to other preferred embodiments, the network element is suitable to communicate with the management apparatus by means of at least a web service, and in this case the transmission module is capable of formatting the message according to a web-based communication protocol.

According to a third aspect, the present invention provides a management apparatus configured for performing a management operation upon a network element of a telecommunication network, wherein the network element is as set forth above, and wherein the management apparatus comprises a constraint processing module configured for checking whether a further attribute or a further operation included in a request message to be sent by the management apparatus to the network element fulfills the constraint.

According to a fourth aspect, the present invention provides a telecommunication network comprising a network element according to the second aspect of the invention, said telecommunication network being capable of cooperating with a network management apparatus according to the third aspect of the invention.

### Brief description of the drawings

The present invention will become clearer by reading the following description, given by way of example and not of limitation, to be read with reference to the accompanying drawings, wherein:
- Figure 1 schematically shows a telecommunication network configured for implementing the method according to an embodiment of the present invention;
- Figures 2a and 2b schematically show the structure of a message sent by a network element to the management apparatus according to a first and second embodiments of the present invention, respectively;
- Figure 3 shows an example of a portion of a local database of a network element of the network of Figure 1;
- Figure 4 shows an example of a table of constraints relative to the portion of local database shown in Figure 3; and
- Figures 5a and 5b show schematic flow charts of three operation steps of the telecommunication network of Figure 1.

### Detailed description of preferred embodiments of the invention

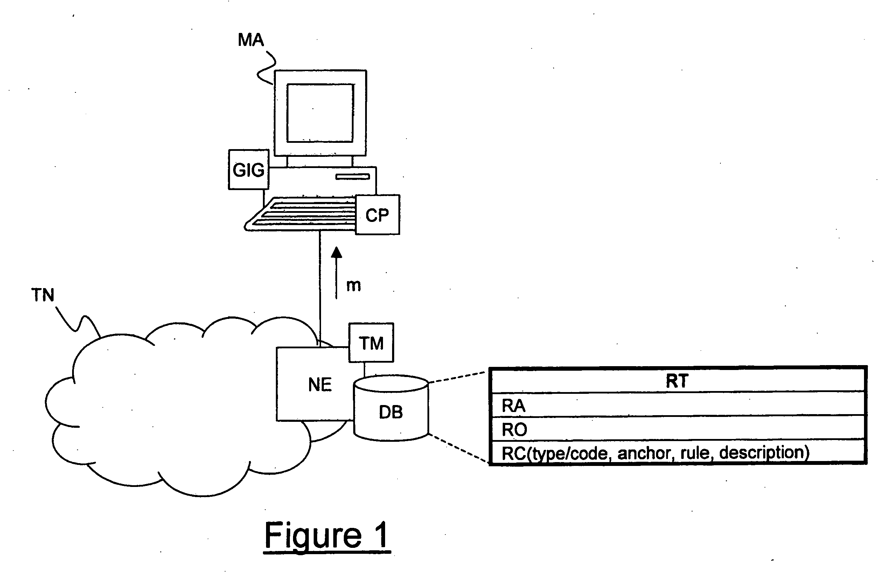

Figure 1 schematically shows a telecommunication network TN configured for implementing the method according to an embodiment of the present invention. The telecommunication network TN comprises a plurality of network elements, although Figure 1 for simplicity shows a single network element NE. Further, the telecommunication network TN is connected to a management apparatus MA, such as for instance the above described NMS.

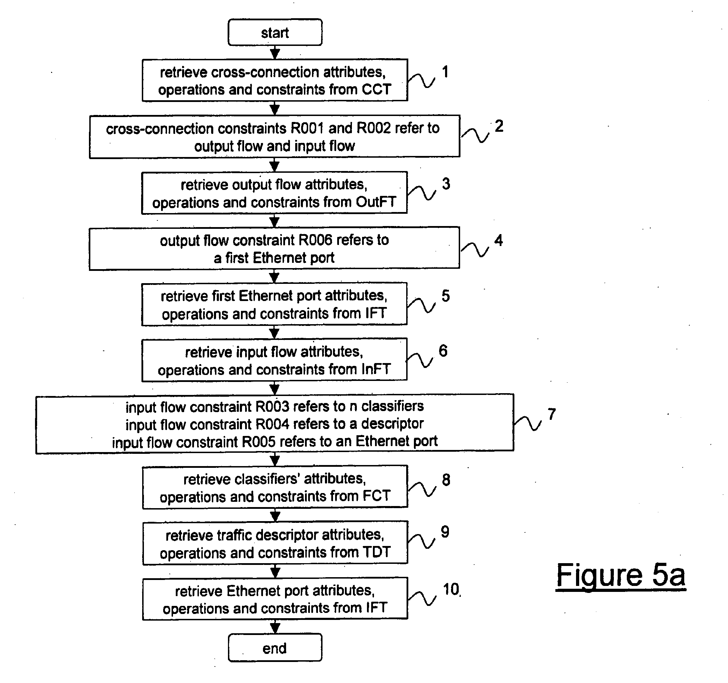

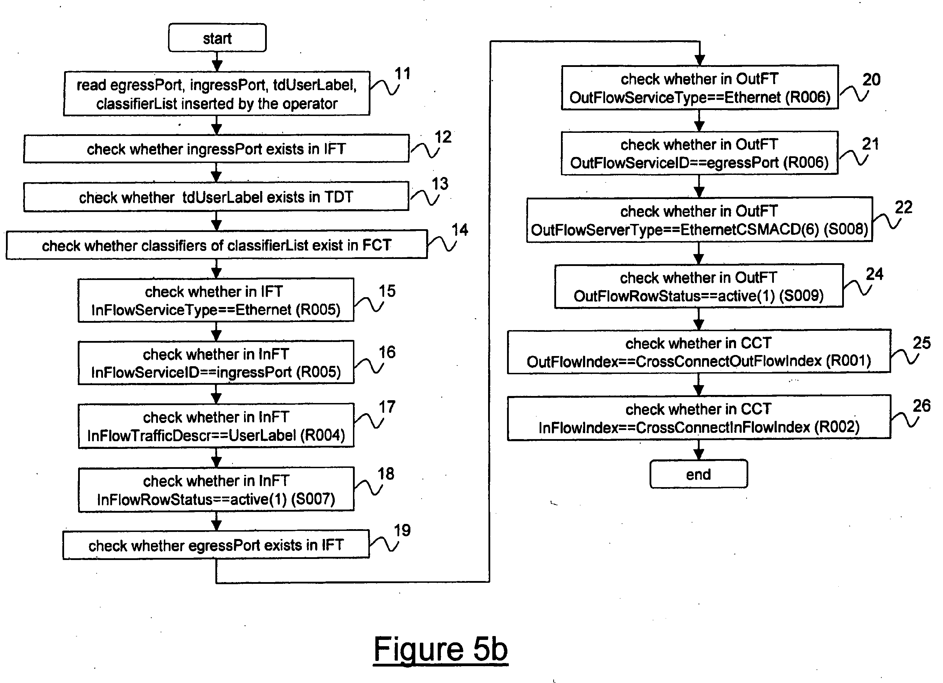

The management apparatus MA is connected to all the network elements of the telecommunication network TN. In particular, Figure 1 shows the connection between the management apparatus MA and the network element NE. The management apparatus MA is suitable to execute several management applications, i.e. several computer programs allowing to perform management operations. Further, the management apparatus MA is suitable to execute a graphic interface generation computer program GIG, which is configured for generating a graphic interface displayable by an operator responsible for managing the telecommunication network TN for instance by means of the screen of the management apparatus MA. The management apparatus MA is further suitable to execute a constraint processing computer program CP, whose role will be described in further detail herein after by referring to flow charts of Figures 5a and 5b.

As already mentioned in the introduction, the network element NE comprises an agent for communicating with the management apparatus MA. The agent is not shown in Figure 1 for simplicity. Further, the network element NE comprises a local database DB. As already mentioned, the local database DB comprises a representation of the resources of the network element NE. In particular, for each resource of the network element NE the local database DB comprises one or more resource attributes and one or more operations that can be performed upon the resource.

In particular, Figure 1 shows a representation of one of the resources of the network element NE. Such a resource (which may be a board, a cross-connection, a port, etc.) is represented in form of a table RT. The table RT comprises a list RA of resource attributes and a list RO of operations which can be performed upon the resource.

Further, according to the present invention, the table RT representing the resource also includes further information which, in the following description and in the claims, will be termed "constraints", and which are indicated in Figure 1 as RC.

In particular, in the following description and in the claims, the term "constraint" will indicate a code portion expressing a condition that must be fulfilled by an attribute or operation associated to the resource. In particular, according to preferred embodiments of the present invention, a constraint may be of one of the following types:
- relationship constraint: it expresses a relationship between an attribute of a given resource and at least an attribute of another resource;
- static constraint: it expresses a relationship between an attribute of a given resource and at least a time-constant value. Such a time-constant value may be for instance a configuration parameter of a resource, which parameter, after it has been created, is not modified while the resource is operative;
- dynamic constraint: it expresses a relationship between an attribute of a given resource and at least a time-variable value. Such a time-variable value may be for instance a state parameter of a resource (active, inactive, error), which may vary in time according to the operative conditions of the network.

Detailed examples of the three types of constraints will be described herein after in greater detail.

According to preferred embodiments of the present invention, each constraint comprises four fields:
- type/code: it comprises a constraint unique identifier and, preferably, a constraint type (relationship constraint, static constraint or dynamic constraint);
- anchor: it comprises a name of the attribute or operation which has to fulfill the condition comprised in the constraint;
- rule: it comprises the condition which has to be fulfilled by the attribute or operation identified in the anchor field; and
- description: it comprises additional information about the constraint (for instance, it indicates when the constraint must be checked).

Preferably, constraints stored in the local database DB are written in a markup language, such as for example the WSDL ("Web Service Description Language").

According to the present invention, the apparatus MA may request to the network element not only attributes and operations relative to the various resources represented in its local database DB, but also the constraints associated to each resource.

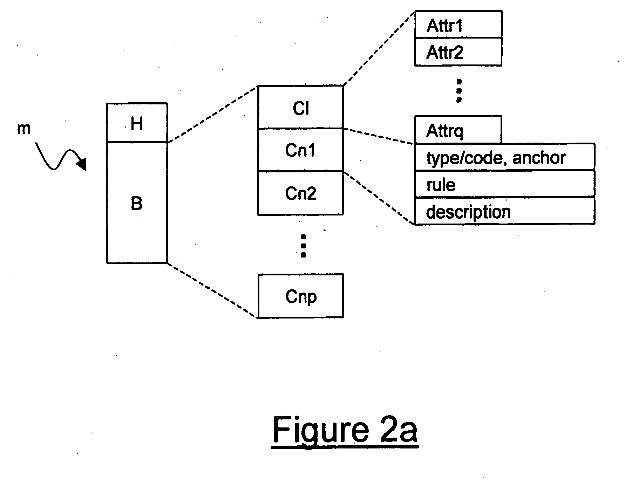

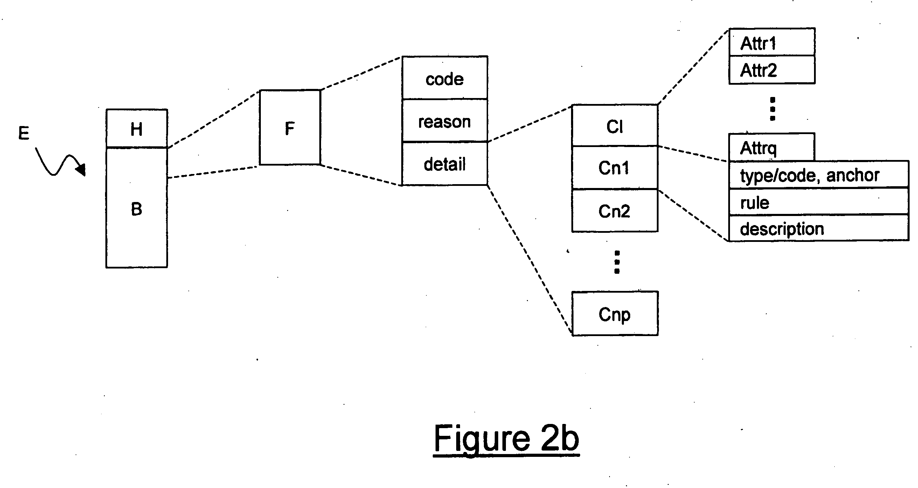

In particular, Figures 2a and 2b show a first and second embodiment, respectively, of a message m sent by the network element NE to the management apparatus MA, comprising constraints relative to one or more resources represented in the local database DB. The message m is formatted and sent by a transmitting module TM comprised in the network element NE.

By referring first to Figure 2a, the message m preferably comprises a header H and a message body B. Advantageously, the message m may be formatted according to a management protocol (e.g. CORBA, SNMP, etc.). According to preferred embodiments of the present invention, the management apparatus MA and the network element NE are configured for communicating the one with the other by means of web applications, such as Web Services. In this case, the message m may be formatted according to any web-based communication protocol, such as for instance SOAP ("Simple Object Management Protocol").

According to the first embodiment shown in Figure 2a, the message body B of the message m comprises a class field Cl and a plurality of constraint fields Cn1, Cn2, ..., Cnp. Preferably, the class field Cl comprises a list of attributes and/or operations involved in one or more constraints. For instance, Figure 2a shows that the class field Cl comprises the identifiers of q attributes Attr1, Attr2, ..., Attrq. Such attributes Attr1, Attr2, ..., Attrq preferably belong to a same resource.

Preferably, the constraint fields Cn1, Cn2, ..., Cnp have similar structure. For simplicity, Figure 2a shows in detail only the structure of the first constraint field Cn1. The constraint field Cn1 comprises three sub-fields, wherein the first sub-field comprises the constraint type/code, the second sub-field comprises the constraint rule and the third sub-field comprises the constraint description.

According to the second embodiment shown in Figure 2b, if the message m sent by the network element NE to the management apparatus MA comprises an error field F inside the message body B, the constraints are comprised in the error field F. In particular, according to the above mentioned SOAP protocol, the field F in turn comprises three fields (shown in Figure 2b): code field, reason field and detail field. For instance, if the message m comprises a plurality of constraints, the code field may comprise the type/code of the first constraint comprised in the message m. Further, the reason field may comprise the description of the first constraint comprised in the message m. Finally, the detail field may comprise a class field Cl and a plurality of constraint fields Cn1, Cn2, ..., Cnp. The structure of the class field Cl and of the constraint fields Cn1, Cn2, ..., Cnp is identical to the structure described above by referring to Figure 2a.

When the message m is received by the management apparatus MA, it is processed by the above mentioned constraint processing module CP. Such a module CP extracts the constraints from the message m, it interprets them and it uses them for checking whether attributes and operations contained in the request messages (which have not been sent by the apparatus MA yet) fulfill the conditions comprised in the constraints.

Therefore, contrary to the prior art, such checks are not performed at the network element. On the contrary, advantageously, according to the present invention checking whether attributes and operations comprised in a given request message generated by the management apparatus fulfill the associated conditions is performed directly at the management apparatus, before transmitting the request message. This is possible since conditions that must be fulfilled by the various attributes and operations associated to the network element resources are formalized in form of "constraints" (preferably written in a markup language) and inserted in the local database of the network element, and therefore they can be sent by the network element to the management apparatus by means of a management protocol or a communication protocol.

Therefore, if attributes and operations comprised in a request message do not fulfill the conditions comprised in the associated constraints (i.e. in the constraints of which these attributes and operations are the anchor), the request message is not transmitted to the network element, and an error message is generated directly by the management apparatus MA, which error message is displayed by means of the graphic interface of the management apparatus.

This advantageously allows to reduce the number of messages exchanged between the management apparatus and the network element, and to reduce the consumption of computation resources at the network element. Indeed, in this way it is possible to send to the network element only request messages comprising attributes and operations actually fulfilling the conditions comprised in the associated constraints.

This advantageously further allows to perform management operations in a dynamic way.

For instance, since the management apparatus according to the present invention knows the constraints associated to each resource, it can support generation of a dynamic interface. More particularly, the management apparatus may advantageously use the constraints associated to a cross-connection for generating a graphic interface allowing an operator to create a cross-connection and which is capable, without requiring any interaction with the network element, of "guiding" the operator through the various steps of creation. For instance, such a graphic interface can prevent the user from selecting a non-valid identifier for the cross-connection input and output ports, by checking a static constraint on attributes identifying the input port and the output port. Further, such a graphic interface can display an error message if one of the ports specified by the operator does not exist, while generating a window allowing the operator to create a port.

The same advantage occurs when executing a test upon the network, since the management apparatus, by knowing constraints associated to the various resources, is advantageously capable of autonomously generating a test set without any interaction with the network elements.

Finally, the same advantage occurs in case of fault management. Indeed, when an error or fault occurs in one of the network elements, the management apparatus is capable of generating a guided troubleshooting interface, allowing the operator to discover the error cause by establishing which constraints are no more fulfilled, without requiring to exchange messages between management apparatus and network element.

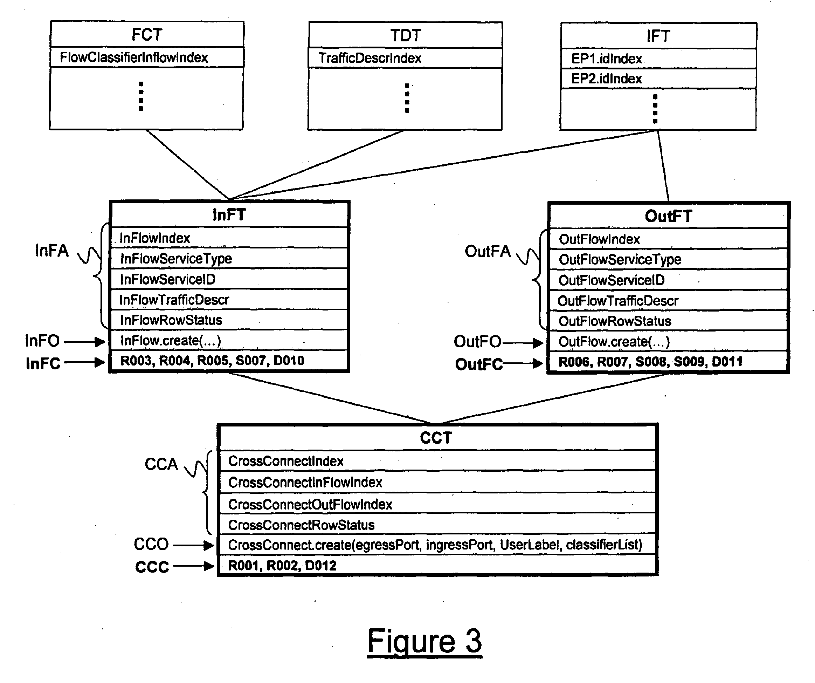

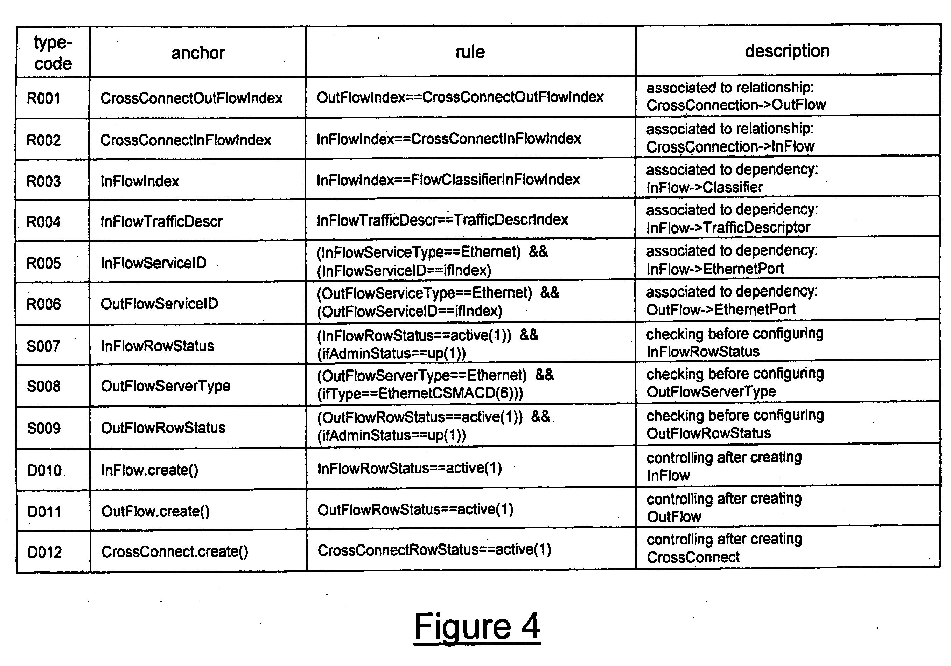

Herein after, by referring to Figures 3 and 4, an example of performing a management operation upon a network element according to a preferred embodiment of the present invention will be described.

Figure 3 shows an exemplary portion of a local database DB of the network element NE.

The portion shown in Figure 3 relates to an Ethernet cross-connection. In particular, the Ethernet cross-connection is represented by a first table CCT. The table CCT comprises a list of attributes CCA of the cross-connection. Such attributes CCA are, for instance:
- CrossConnectIndex, i.e. the cross-connection identifier;
- Cross-ConnectInFlowIndex, identifying the cross-connection input flow;
- Cross-ConnectOutFlowIndex, identifying the cross-connection output flow;
   and
- CrossConnectRowStatus, indicating whether the port is active.

Further, the table CCT comprises a list of operations CCO which can be performed upon the cross-connection. For simplicity, Figure 3 shows a single operation:
CrossConnect.create(egressPort, ingressPort, UserLabel, classifierList), allowing to create the cross-connection. In brackets, there are the parameters that must be specified by the operator in order to perform the operation, i.e.: output port name, input port name, traffic descriptor and a list of traffic classifiers.

Further, according to embodiments of the present invention, the table CCT comprises three constraints R001, R002, D012, which will be described in further detail herein after.

The portion of the local database DB shown in Figure 3 further comprises two tables InFT and OutFT, which represent the cross-connection input flow and the cross-connection output flow, respectively.

In particular, the table InFT comprises a list of attributes InFA of the input flow. Such attributes are, for instance:
- InFlowlndex, i.e. the input flow identifier;
- InFlowServiceType, identifying the service type associated to the input flow (Ethernet, ATM, etc.);
- InFlowServiceID, i.e. the service identifier associated to the input flow;
- InFlowTrafficDescriptor, identifying the traffic descriptor associated to the input flow;
- InFlowRowStatus, indicating whether the input flow is active.

Further, the table InFT comprises a list of operations InFO that can be performed upon the input flow. For simplicity, Figure 3 shows one operation only.

InFlow.create(...), allowing to create the input flow. In brackets, there are the parameters that must be specified by the operator in order to perform the operation, which are not shown in Figure 3 for simplicity.

Further, the table InFT comprises five constraints R003, R004, R005, S007, D010, which will be described in further detail herein after.

Similarly, the table OutFT comprises a list of attributes OutFA of the output flow. Such attributes are, for instance:
- OutFlowIndex, i.e. the output flow identifier;
- OutFlowServiceType, identifying the service type associated to the output flow (Ethernet, ATM, etc.);
- OutFlowServiceID, i.e. the service identifier associated to the output flow;
- OutFlowTrafficDescr, identifying the traffic descriptor associated to the output flow;
- OutFlowRowStatus, indicating whether the output flow is active.

Further, the table OutFT comprises a list of operations OutFO which can be performed upon the output flow. For simplicity, Figure 3 shows a single operation only:
OutFlow.create(...), allowing to create the output flow. In brackets, there are the parameters that must be specified by the operator in order to perform the operation, which are not shown in Figure 3 for simplicity.

Further, the table OutFT comprises five constraints R006, R007, S008, S009, D011, which will be described in further detail herein after.

The portion of the local database shown in Figure 3 finally comprises a
table FCT comprising a list of flow classifiers, a table TDT representing the traffic descriptor of the input flow, and a table IFT representing the physical interfaces of the network element NE.
   Figure 4 shown in form of a table the content of constraints comprised in the portion of local database DB described above by referring to Figure 3.

The constraint identified by the type/code field R001 is a relationship constraint. It comprises the cross-connection attribute CrossConnectOutFlowIndex in its anchor field; this means that the constraint R001 relates to the value of the attribute CrossConnectOutFlowIndex. In the rule field, it comprises the following equality:
OutFlowIndex==CrossConnectOutFlowIndex,
   i.e. the output flow identifier comprised in the table CCT must be equal to the output flow identifier comprised in the table OutFT. Finally, the description field of the constraint R001 indicates that the constraint R001 is associated to the relationship between the cross-connection and the output flow.

Similarly, the constraint identified by the type/code field R002 is a relationship constraint. It comprises the cross-connection attribute CrossConnectInFlowIndex in its anchor field. In the rule field, it comprises the following equality:
InFlowIndex==CrossConnectInFlowIndex,
   i.e. the input flow identifier comprised in the table CCT must be equal to the input flow identifier comprised in the table InFT. Finally, the description field of the constraint R002 indicates that the constraint R002 is associated to the relationship between the cross-connection and the input flow.

Similarly, the constraint identified by the type/code field R003 is a relationship constraint. It comprises the input flow attribute InFlowIndex in its anchor field. In the rule field, it comprises the following equality:
InFlowIndex== FlowClassifierInFlowIndex,
   i.e. the input flow identifer comprised in the table InFT must be equal to the input flow identifier comprised in the table FCT. Finally, the description field of the constraint R003 indicates that the constraint R003 is associated to the dependency of the input flow upon the table of flow classifiers.

Similarly, the constraint identified by the type/code field R004 is a relationship constraint. It comprises the input flow attribute InFlowTrafficDesc in its anchor field. In the rule field, it comprises the following equality:
InFlowTrafficDescr==TrafficDescrIndex
   i.e. the input flow traffic descriptor comprised in the table InFT must be equal to the input flow traffic descriptor comprised in the table TDT. Finally, the description field of the constraint R004 indicates that the constraint R004 is associated to the dependency of the input flow upon the table of traffic descriptors.

Similarly, the constraint identified by the type/code field R005 is a relationship constraint. It comprises the input flow attribute InFlowServiceID in its anchor field. In the rule field, it comprises the following equalities:
InFlowServiceType==Ethemet and
InFlowServiceID==ifIndex,
   i.e. the input flow service identifier comprised in the table InFT must be equal to an Ethernet port identifier comprised in the interface table IFT. Finally, the description field of the constraint R005 indicates that the constraint R005 is associated to the dependency of the input flow upon the cross-connection input Ethernet port.

Similarly, the constraint identified by the type/code field R006 is a relationship constraint. It comprises the output flow attribute OutFlowServiceID in its anchor field. In the rule field, it comprises the following equalities:
OutFlowServiceType==Ethernet and
OutFlowServiceID==ifIndex,
   i.e. the output flow service identifier comprised in the table OutFT must be equal to an Ethernet port identifier comprised in the interface table IFT.

Finally, the description field of the constraint R006 indicates that the constraint R006 is associated to the dependency of the output flow upon the cross-connection output Ethernet port.

The constraint identified by the type/code field S007 is a static constraint. It comprises the input flow attribute InFlowRowStatus in its anchor field. In the rule field, it comprises the following equalities:
InFlowRowStatus==active(1) and
ifAdminStatus==up(1),
   i.e. the input flow must be already created and the port associated thereto must be active from the administrative point of view. Finally, the description field of the constraint S007 indicates that the constraint S007 must be checked before assigning a value to the attribute InFlowRowStatus.

The constraint identified by the type/code field S008 is a static constraint. It comprises the output flow attribute OutFlowServiceType in its anchor field. In the rule field, it comprises the following equalities:
OutFlowServiceType ==Ethernet and
ifType==EthernetCsmacd(6),
   i.e. the output flow OutFlow and the port associated thereto are both of Ethernet type. Finally, the description field of the constraint S008 indicates that the constraint S008 must be checked before assigning a value to the attribute OutFlowServiceType.

The constraint identified by the type/code field S009 is a static constraint. It comprises the output flow attribute OutFlowRowStatus in its anchor field. In the rule field, it comprises the following equalities:
OutFlowRowStatus==active(1) and
ifAdminStatus==up(1),
   i.e. the output flow must be already created and the port associated thereto must be active from the administrative point of view. Finally, the description field of the constraint S009 indicates that the constraint S009 must be checked before assigning a value to the attribute OutFlowRowStatus.

The constraint identified by the type/code field D010 comprises a dynamic constraint. It comprises the operation InFlow.create(...) in its anchor field. In the rule field, it comprises the following equality:
InFIowRowStatus==active(1),
   i.e. the input flow must be active. Finally, the description field of the constraint D010 indicates that the field D010 must be checked after creation of the instance InFlow.

The constraint identified by the type/code field D011 comprises a dynamic constraint. It comprises the operation OutFlow.create(...) in its anchor field. In the rule field, it comprises the following equality:
OutFlowRowStatus==active(1),
   i.e. the output flow must be active. Finally, the description field of the constraint D011 indicates that the field D011 must be checked after creation of the instance OutFlow.

Finally, the constraint identified by the type/code field D012 is a dynamic constraint. It comprises the operation CrossConnect.create(...) in its anchor field. In the rule field, it comprises the following equality:
CrossConnectRowStatus==active(1),
   i.e. the cross-connection must be active. Finally, the description field of the constraint D012 indicates that the constraint D012 must be checked after creation of the instance CrossConnect.

Herein after, the various steps for creating an Ethernet cross-connection will be described by referring to Figures 5a, 5b. The steps shown in Figures 5a and 5b are advantageously performed by the constraint processing module CP shown in Figure 1.

Reference is firstly made to Figure 5a, showing a first plurality of steps of the operation of creating an Ethernet cross-connection according to an embodiment of the present invention.

The operator firstly sends a request message for retrieving attributes, operations and constraints relative to an Ethernet cross-connection to the network element upon which he wishes to create the Ethernet cross-connection. The network element, after receiving the request message, retrieves from the table CCT in its own local database the attributes CCA, the operations CCO and the constraints CCC (i.e. R001, R002 e D010) associated to the Ethernet cross-connection. Then, by means of the constraints R001 and R002, during a second step 2 the network element identifies the input flow and the output flow.

During a successive step 3 the network element then retrieves the attributes OutFA, the operations OutFO and the constraints OutFC associated to the output flow from the table InFT. Then, by means of the relationship constraints R006, during a successive step 4 the network element identifies a first Ethernet port. Then, during a successive step 5, the network element retrieves attributes, operations and constraints for the first Ethernet port from the table IFT.

During a successive step 6 the network element retrieves the attributes InFA, the operations InFO and the constraints InFC associated to the input flow from the table InFT. During a successive step 7, by means of the constraints R003, R004 and R005, the network element identifies the flow classifiers, the traffic descriptor and a second Ethernet port. During a successive step 8, for each traffic classifier the network element retrieves attributes, operations and constraints from the table FCT; similarly, during a step 9 the network element retrieves attributes, operations and constraints of the traffic descriptor from the table TDT; similarly, during a step 10, the network element retrieves attributes, operations and constraints of the second Ethernet port from the table IFT.

At the end of step 10, the network element sends to the management apparatus MA one or more response messages comprising the retrieved information. Alternatively, the management apparatus, by knowing the constraints, may perform the described steps for determining the involved resources and then for requesting to the network element details about each single resource, as it will be described in greater detail by referring to step 11. In this way, the management apparatus MA advantageously has a representation of the resources involved in the operation to be performed, which takes into account the constraints among these resources.

Then the operator, through the graphic interface of the management apparatus MA, orders the cross-connect creation, i.e. it starts the CrossConnect.create operation. As already mentioned, he has to specify a cross-connection identifier, an input flow identifier (for instance "ingressPort"), an output flow identifier (for instance "egressPort"), a traffic descriptor (for instance "tdUserLabel") and one or more flow classifiers. These parameters are read at the management apparatus MA during a step 11.

Then, during the successive steps shown in Figure 5b, the attributes of resources linked by relationship constraints to the attributes that must be specified for performing the cross-connection creation operation are selected, and their consistency is checked.

More particularly, during a step 12 it is checked whether the ingress port specified by the operator (i.e. the port "ingressPort") has already been created, i.e. whether it exists in the physical interface table IFT. Then, during step 13, it is checked whether the traffic descriptor specified by the operator (i.e. the traffic descriptor "tdUserLabel") has already been created, i.e. whether it exists in the table TDT. Then, during a successive step 14, it is checked whether the flow classifiers specified by the operator have already been created, i.e. whether they exist in the table FDT.

Therefore, at the end of step 14, if all checks have positive outcome, it is established that it is possible to start checking the relationship constraints R005 and R004, which link flow classifiers, the traffic descriptor and the input flow Ethernet port. In particular, during step 15 it is checked whether InFlowServiceType==Ethernet and, during step 16, it is checked whether InFlowServiceID==ingressPort. Further, during step 17, it is checked whether InFlowTrafficDescr==UserLabel. Further, during a successive step 18, the static constraint S007 is checked, i.e. it is checked whether InFlowRowStatus==active(1). If all checks have positive outcome, this allows to establish that the ingress flow has been created and is active.

During step 19, it is checked whether the output port specified by the operator (i.e. the port "egressPort") has already been created, i.e. it exists in the physical interface table IFT. If this check has a positive outcome, it is established to start checking the relationship constraint R007, which links the Ethernet port and the output flow. In particular, during step 20 it is checked whether OutFlowServiceType==Ethernet and, during step 21, it is checked whether OutFlowServiceID==egressPort. Further, during step 22 the static constraint S007 is checked, i.e. it is checked whether OutFlowServerType==EthernetCSMACD, and during a successive step 23 the static constraint S009 is checked, i.e. it is checked whether OutFlowRowStatus==active(1).

At the end of step 24, if all the checks have positive outcome, it is possible to conclude that the input flow and the output flow corresponding to the ports specified by the operator actually exist and they are active, since their attributes fulfill all the relationship and static constraints. Then, the relationship constraints associated to the cross-connection, i.e. R001 and R002, are checked. In particular, during step 25 it is checked whether OutFlowIndex==CrossConnectOutFlowIndex, and during step 26 it is checked whether InFlowIndex==CrossConnectInFlowIndex.

Finally, during successive steps not shown in the Figures, the values specified by the operator through the graphic interface of the management apparatus are assigned to the various attributes, by also checking their admissibility (i.e. by checking whether these values lie in allowable ranges).

Therefore, according to the present invention it is possible to perform a check of consistency and admissibility of attributes and operations comprised in the request message for creating the cross-connection before sending this request message to the network element, since the management apparatus may retrieve from the network element all the constraints relative to all the resources involved in the creation operation, and then perform consistency and admissibility checks directly by means of its constraints processing module.

The request message containing attributes and operations is then sent to the network element only after checks performed by the constraint processing module provide a positive outcome.

This advantageously allows to avoid sending request messages having an erroneous content to the network element, which network element can then directly process the received request message and perform the requested operations without performing any other check and without sending any confirmation message to the management apparatus.

## Claims

1. A method of performing a management operation upon a network element (NE) of a telecommunication network (TN), comprising the step of:
a) storing at the network element (NE) information relative to a resource of the network element (NE), said information comprising at least one of an attribute (RA) of said resource and of an operation (RO) performable on said resource and a constraint (RC) associated to said resource, said constraint comprising a code portion expressing a condition that must be fulfilled by said attribute (RA) or by said operation (RO);
the method being **characterized in that** it further comprises:
b) transmitting a message (m) from said network element (NE) to a management apparatus(MA) of said telecommunication network (TN), said message (m) comprising said constraint (RC); and
c) checking at said management apparatus (MA) whether a further attribute or a further operation included in a request message to be sent by said management apparatus (MA) to said network element (NE) fulfills said constraint (RC).

2. The method according to claim 1, wherein said step of storing comprises a step of storing a type and an identifier of said constraint (RC), an identifier of said at least one of said attribute (RA) and of said operation (RO) and a relation that said at least one of said attribute (RA) and of said operation (RO) has to fulfill.

3. The method according to claim 1 or 2, wherein said step of transmitting comprises a step of formatting said message (m) according to a management protocol.

4. The method according to claim 1 or 2, wherein said step of transmitting comprises a step of making said management apparatus (MA) and said network element (NE) interact by means of at least one web service.

5. The method according to claim 4, wherein said step of transmitting comprises a step of formatting said message (m) according to a web-based communication protocol.

6. A network element (NE) of a telecommunication network (TN), said network element comprising:
- a database (DB) comprising information relative to a resource of said network element (NE), said information comprising at least one of an attribute (RA) of said resource and of an operation (RO) performable on said resource and a constraint (RC) associated to said resource, said constraint comprising a code portion expressing a condition that must be fulfilled by said attribute (RA) or by said operation (RO); and
- a transmitting module (TM) for transmitting a message (m) from said network element (NE) to a management apparatus (MA) of said telecommunication network (TN), said message (m) comprising said constraint (RC),
- wherein said management apparatus (MA) is adapted to check whether a further attribute or a further operation included in a request message to be sent by said management apparatus (MA) to said network element (NE) fulfills said constraint (RC).

7. The network element (NE) according to claim 6, wherein said constraint (RC) comprises: a type and an identifier of said constraint (RC), an identifier of said at least one of said attribute (RA) and of said operation (RO) and a relation that said at least one of said attribute (RA) and of said operation (RO) has to fulfill.

8. The network element (NE) according to claim 6 or 7, wherein said constraint (RC) comprises a relationship between said at least one of said attribute (RA) and of said operation (RO) and at least one of a still further attribute of a further resource of said network element (NE) and a still further operation performable on said further resource.

9. The network element (NE) according to claim 6 or 7, wherein said constraint (RC) comprises a relationship between said at least one of said attribute (RA) and of said operation (RO) and a time-constant value.

10. The network element (NE) according to claim 6 or 7, wherein said constraint (RC) comprises a relationship between said at least one of said attribute (RA) and of said operation (RO) and a time-variable value.

11. The network element (NE) according to any of claims 6 to 10, wherein said transmitting module (TM) is capable of formatting said message (m) according to a management protocol.

12. The network element (NE) according to any of claims 6 to 11, wherein said network element (NE) is configured for communicating with said management apparatus (MA) by means of at least a web service.

13. The network element (NE) according to claim 12, wherein said transmission module (TM) is capable of formatting said message (m) according to a web-based communication protocol.

14. Management apparatus (MA) configured for performing a management operation upon a network element (NE) of a telecommunication network (TN), wherein said network element (NE) is according to any of claims 6 to 13, and wherein said management apparatus (MA) comprises a constraint processing module (CP) configured for checking whether a further attribute or a further operation included in a request message to be sent by said management apparatus (MA) to said network element (NE) fulfills said constraint (RC).

15. Telecommunication network (TN) comprising a network element (NE) according to any of claims 6 to 13, said telecommunication network being capable of cooperating with a network management apparatus (MA) according to claim 14.

## Patentansprüche

1. Ein Verfahren zur Durchführung einer Verwaltungsoperation auf einem Netzwerkelement (NE) eines Telekommunikationsnetzwerks (TN), die folgenden Schritte umfassend:
a) Speichern von Informationen in Bezug auf eine Ressource des Netzwerkelements (NE) auf dem Netzwerkelement (NE), wobei die besagten Informationen mindestens entweder ein Attribut (RA) der besagten Ressource oder eine auf der besagten Ressource durchführbare Operation (RO) und einen mit der besagten Ressource assoziierte Constraint (RC) enthalten, wobei der besagte Constraint einen Codeabschnitt umfasst, welcher eine Bedingung ausdrückt, die von dem besagten Attribut (RA) oder der besagten Operation (RO) erfüllt werden muss;
wobei das Verfahren **dadurch gekennzeichnet ist, dass** es weiterhin umfasst:
b) Übertragen einer Nachricht (m) von dem besagten Netzwerkelement (NE) an eine Verwaltungsvorrichtung (MA) des besagten Telekommunikationsnetzwerks (TN), wobei die besagte Nachricht (m) den besagten Constraint (RC) enthält; und
c) Prüfen an der besagten Verwaltungsvorrichtung (MA), ob ein(e) in einer von der besagten Verwaltungsvorrichtung (MA) an das besagte Netzwerkelement (NE) zu sendenden Anforderungsnachricht enthaltene(s) weiteres Attribut oder weitere Operation den besagten Constraint (RC) erfüllt.

2. Das Verfahren nach Anspruch 1, wobei der besagte Schritt des Speicherns einen Schritt des Speicherns eines Typs und einer Kennung des besagten Constraints (RC), einer Kennung zumindest entweder des besagten Attributs (RA) oder der besagten Operation (RO) und einer Relation, welche zumindest entweder von dem besagten Attribut (RA) oder der besagten Operation (RO) zu erfüllen ist, umfasst.

3. Das Verfahren nach Anspruch 1 oder 2, wobei der besagte Schritt des Übertragens einen Schritt des Formatierens der besagten Nachricht (m) gemäß einem Verwaltungsprotokoll umfasst.

4. Das Verfahren nach Anspruch 1 oder 2, wobei der besagte Schritt des Übertragens einen Schritt umfasst, welcher bewirkt, dass die besagte Verwaltungsvorrichtung (MA) und das besagte Netzwerkelement (NE) anhand von zumindest einem Web-Dienst zusammenwirken.

5. Das Verfahren nach Anspruch 4, wobei der besagte Schritt des Übertragens einen Schritt des Formatierens der besagten Nachricht (m) gemäß einem webbasierten Kommunikationsprotokoll umfasst.

6. Ein Netzwerkelement (NE) eines Telekommunikationsnetzwerks (TN), wobei das besagte Netzwerkelement umfasst:
- Eine Datenbank (DB) mit Informationen in Bezug auf eine Ressource des besagten Netzwerkelements (NE), wobei die besagten Informationen mindestens entweder ein Attribut (RA) der besagten Ressource oder eine auf der besagten Ressource durchführbare Operation (RO) und einen mit der besagten Ressource assoziierten Constraint (RC) enthalten, wobei der besagte Constraint einen Codeabschnitt umfasst, welcher eine Bedingung ausdrückt, die von dem besagten Attribut (RA) oder der besagten Operation (RO) erfüllt werden muss; und
- ein Übertragungsmodul (TM) zum Übertragen einer Nachricht (m) von dem besagten Netzwerkelement (NE) an eine Verwaltungsvorrichtung (MA) des besagten Telekommunikationsnetzwerks (TN), wobei die besagte Nachricht (m) den besagten Constraint (RC) enthält,
- wobei die besagte Verwaltungsvorrichtung (MA) dazu ausgelegt ist, zu prüfen, ob ein(e) in einer von der besagten Verwaltungsvorrichtung (MA) an das besagte Netzwerkelement (NE) zu sendenden Anforderungsnachricht enthaltene(s) weiteres Attribut oder weitere Operation den besagten Constraint (RC) erfüllt.

7. Das Netzwerkelement (NE) nach Anspruch 6, wobei der besagte Constraint (RC) umfasst: Einen Typ und eine Kennung des besagten Constraints (RC), eine Kennung zumindest entweder des besagten Attributs (RA) oder der besagten Operation (RO) und eine Relation, welche zumindest entweder von dem besagten Attribut (RA) oder der besagten Operation (RO) zu erfüllen ist.

8. Das Netzwerkelement (NE) nach Anspruch 6 oder 7, wobei der besagte Constraint (RC) eine Beziehung zwischen zumindest entweder dem besagten Attribut (RA) oder der besagten Operation (RO) und zumindest entweder einem weiteren Attribut einer weiteren Ressource des besagten Netzwerkelements (NE) oder einer weiteren auf der besagten weiteren Ressource ausführbaren Operation umfasst.

9. Das Netzwerkelement (NE) nach Anspruch 6 oder 7, wobei der besagte Constraint (RC) eine Beziehung zwischen zumindest entweder dem besagten Attribut (RA) oder der besagten Operation (RO) und einem zeitkonstanten Wert umfasst.

10. Das Netzwerkelement (NE) nach Anspruch 6 oder 7, wobei der besagte Constraint (RC) eine Beziehung zwischen zumindest dem besagten Attribut (RA) oder der besagten Operation (RO) und einem zeitvariablen Wert umfasst.

11. Das Netzwerkelement (NE) nach einem beliebigen der Ansprüche 6 bis 10, wobei das besagte Übertragungsmodul (TM) fähig ist, die besagte Nachricht (m) gemäß einem Verwaltungsprotokoll zu formatieren.

12. Das Netzwerkelement (NE) nach einem beliebigen der Ansprüche 6 bis 11, wobei das besagte Netzwerkelement (NE) für die Kommunikation mit der besagten Verwaltungsvorrichtung (MA) anhand von mindestens einem Web-Dienst konfiguriert ist.

13. Das Netzwerkelement (NE) nach Anspruch 12, wobei das besagte Übertragungsmodul (TM) fähig ist, die besagte Nachricht (m) gemäß einem webbasierten Kommunikationsprotokoll zu formatieren.

14. Verwaltungsvorrichtung (MA), konfiguriert für das Durchführen einer Verwaltungsoperation auf einem Netzwerkelement (NE) eines Telekommunikationsnetzwerks (TN), wobei das besagte Netzwerkelement (NE) einem beliebigen der Ansprüche 6 bis 13 entspricht, und wobei die besagte Verwaltungsvorrichtung (MA) ein Constraintverarbeitungsmodul (CP) umfasst, welches dafür konfiguriert ist, zu prüfen, ob ein(e) in einer von der besagten Verwaltungsvorrichtung (MA) an das besagte Netzwerkelement (NE) zu sendenden Anforderungsnachricht enthaltene(s) weiteres Attribut oder weitere Operation den besagten Constraint (RC) erfüllt.

15. Telekommunikationsnetzwerk (TN) mit einem Netzwerkelement (NE) nach einem beliebigen der Ansprüche 6 bis 13, wobei das besagte Telekommunikationsnetzwerk fähig ist, mit einer Netzwerkverwaltungsvorrichtung (MA) nach Anspruch 14 zusammenzuwirken.

## Revendications

1. Procédé pour effectuer une opération de gestion sur un élément de réseau (NE) d'un réseau de télécommunication (TN), comprenant l'étape suivante :
a) stockage, sur l'élément de réseau (NE), d'informations relatives à une ressource de l'élément de réseau (NE), lesdites informations comprenant au moins soit un attribut (RA) de ladite ressource, soit une opération (RO) qui peut être réalisée sur ladite ressource, et une contrainte (RC) associée à ladite ressource, ladite contrainte comprenant une portion de code exprimant une condition qui doit être satisfaite par ledit attribut (RA) ou par ladite opération (RO) ;
ledit procédé étant **caractérisé en ce qu'**il comprend en outre :
b) transmission d'un message (m) dudit élément de réseau (NE) vers un appareil de gestion (MA) dudit réseau de télécommunication (TN), ledit message (m) comprenant ladite contrainte (RC) ; et
c) contrôle, sur ledit appareil de gestion (MA), pour déterminer si un attribut supplémentaire ou une opération supplémentaire inclut dans un message de demande à envoyer par ledit appareil de gestion (MA) audit élément de réseau (NE) satisfait à ladite contrainte (RC).

2. Procédé selon la revendication 1, dans lequel ladite étape de stockage comprend une étape de stockage d'un type et d'un identifiant de ladite contrainte (RC), d'un identifiant d'au moins soit dudit attribut (RA), soit de ladite opération (RO), et d'une relation qui doit être satisfaite au moins par ledit attribut (RA) ou par ladite opération (RO).

3. Procédé selon la revendication 1 ou 2, dans lequel ladite étape de transmission comprend une étape de mise en forme dudit message (m) conformément à un protocole de gestion.

4. Procédé selon la revendication 1 ou 2, dans lequel ladite étape de transmission comprend une étape de mise en interaction dudit appareil de gestion (MA) avec ledit élément de réseau (NE) au moyen d'au moins un service Web.

5. Procédé selon la revendication 4, dans lequel ladite étape de transmission comprend une étape de mise en forme dudit message (m) conformément à un protocole de communication par le Web.

6. Élément de réseau (NE) d'un réseau de télécommunication (TN), ledit élément de réseau comprenant:
- une base de données (DB) comprenant des informations relatives à une ressource dudit élément de réseau (NE), lesdites informations comprenant au moins soit un attribut (RA) de ladite ressource, soit une opération (RO) qui peut être réalisée sur ladite ressource, et une contrainte (RC) associée à ladite ressource, ladite contrainte comprenant une portion de code exprimant une condition qui doit être satisfaite par ledit attribut (RA) ou par ladite opération (RO) ; et
- un module de transmission (TM) pour transmettre un message (m) dudit élément de réseau (NE) vers un appareil de gestion (MA) dudit réseau de télécommunication (TN), ledit message (m) comprenant ladite contrainte (RC),
- ledit appareil de gestion (MA) étant adapté pour contrôler si un attribut supplémentaire ou une opération supplémentaire inclus dans un message de demande à envoyer par ledit appareil de gestion (MA) audit élément de réseau (NE) satisfait à ladite contrainte (RC).

7. Élément de réseau (NE) selon la revendication 6, dans lequel ladite contrainte (RC) comprend : un type et un identifiant de ladite contrainte (RC), un identifiant d'au moins soit dudit attribut (RA), soit de ladite opération (RO), et une relation qui doit être satisfaite au moins par ledit attribut (RA) ou par ladite opération (RO).

8. Élément de réseau (NE) selon la revendication 6 ou 7, dans lequel ladite contrainte (RC) comprend une relation entre au moins soit ledit attribut (RA), soit ladite opération (RO), et au moins soit un attribut supplémentaire d'une ressource supplémentaire dudit élément de réseau (NE), soit une opération supplémentaire réalisable sur ladite ressource supplémentaire.

9. Élément de réseau (NE) selon la revendication 6 ou 7, dans lequel ladite contrainte (RC) comprend une relation entre au moins soit ledit attribut (RA), soit ladite opération (RO), et une valeur constante dans le temps.

10. Élément de réseau (NE) selon la revendication 6 ou 7, dans lequel ladite contrainte (RC) comprend une relation entre au moins soit ledit attribut (RA), soit ladite opération (RO), et une valeur variable dans le temps.

11. Élément de réseau (NE) selon l'une quelconque des revendications 6 à 10, dans lequel ledit module de transmission (TM) est capable de mettre en forme ledit message (m) conformément à un protocole de gestion.

12. Élément de réseau (NE) selon l'une quelconque des revendications 6 à 11, dans lequel ledit élément de réseau (NE) est configuré pour communiquer avec ledit appareil de gestion (MA) au moyen d'au moins un service Web.

13. Élément de réseau (NE) selon la revendication 12, dans lequel ledit module de transmission (TM) est capable de mettre en forme ledit message (m) conformément à un protocole de communication par le Web.

14. Appareil de gestion (MA) configuré pour réaliser une opération de gestion sur un élément de réseau (NE) d'un réseau de télécommunication (TN), dans lequel ledit élément de réseau (NE) est selon l'une quelconque des revendications 6 à 13, et dans lequel ledit appareil de gestion (MA) comprend un module de traitement de contrainte (CP) configuré pour vérifier si un attribut supplémentaire ou une opération supplémentaire inclus dans un message de demande à envoyer par ledit appareil de gestion (MA) audit élément de réseau (NE) satisfait à ladite contrainte (RC).

15. Réseau de télécommunication (TN) comprenant un élément de réseau (NE) selon l'une quelconque des revendications 6 à 13, ledit réseau de télécommunication étant capable de coopérer avec un appareil de gestion de réseau (MA) selon la revendication 14.
